# EUROPÄISCHE PATENTSCHRIFT

(11) **EP 4 244 137 B1**
(45) Veröffentlichungstag und Bekanntmachung des Hinweises auf die Patenterteilung: **07.05.2025**
(21) Anmeldenummer: 21815117.3
(22) Anmeldetag: 10.11.2021
(51) Int. Cl.: B64G 1/22, B63B 17/00, E05B 15/00

(54) **VERBINDUNGSEINHEIT, BAUTEIL MIT EINER VERBINDUNGSEINHEIT SOWIE VERFAHREN ZUM LÖSEN EINER VERBINDUNG ZWISCHEN ZWEI BAUTEILELEMENTEN**
CONNECTING UNIT, COMPONENT HAVING A CONNECTING UNIT, AND METHOD FOR RELEASING A CONNECTION BETWEEN TWO COMPONENT ELEMENTS
UNITÉ DE LIAISON, COMPOSANT DOTÉ D'UNE UNITÉ DE LIAISON ET PROCÉDÉ DE LIBÉRATION D'UNE LIAISON ENTRE DEUX ÉLÉMENTS DE COMPOSANTS

(30) Priorität: 11.11.2020 DE 102020129776
(43) Veröffentlichungstag der Anmeldung: 20.09.2023
(73) Patentinhaber: Universität Rostock, 18055 Rostock (DE)
(72) Erfinder: GERICKE, Kilian, 18146 Rostock (DE); ZORN, Stefan, 18059 Rostock (DE); BAHLCKE, Tobias, 18059 Rostock (DE); GLASER, Tobias, 49685 Emstek (DE); FRIESE, Oskar, 18057 Rostock (DE); DAHLKE, Richard, 18211 Ostseebad Nienhagen (DE)
(74) Vertreter: Heinemeyer, Karsten
(86) Internationale Anmeldenummer: PCT/EP2021/081241
(87) Internationale Veröffentlichungsnummer: WO 2022/101268

(56) Entgegenhaltungen:
- EP-A1- 3 677 519
- DE-A1- 19 913 048
- GB-A- 2 475 938
- JP-A- 2006 083 917
- US-A1- 2003 076 215

## Beschreibung

Die Erfindung betrifft eine Verbindungseinheit, ein Bauteil mit einer derartigen Verbindungseinheit sowie ein Verfahren zum Lösen einer Verbindung zwischen zwei Bauteilelementen. Hierbei verfügt die Verbindungseinheit über ein erstes und ein zweites Halteelement, die zumindest zeitweise über eine Kopplungseinheit entgegen einer in zumindest eines der Halteelemente eingeleitete Auswurfkraft miteinander verbunden sind, wobei die Halteelemente ferner eingerichtet sind, um jeweils mit unterschiedlichen Bauteilen verbindbar oder verbunden zu sein. Die Kopplungseinheit weist einen Trennmechanismus auf, bei dessen Aktivierung die Verbindung zwischen dem ersten und dem zweiten Halteelement getrennt wird.

Aus dem Stand der Technik sind sogenannte Hold Down-and-Release-Mechanismen bekannt, mit denen zwei Bauelemente derart verbunden werden können, dass diese aus der Ferne oder automatisiert, etwa bei Eintritt eines spezifischen Ereignisses, getrennt werden können. Hold Down-and-Release-Mechanismen werden oftmals in Geräten eingesetzt, die nicht oder nur mit vergleichsweise hohem Aufwand zugänglich sind, wie es beispielsweise auf dem Gebiet der Raumfahrt und der Tiefseetechnik der Fall ist. Zum Beispiel lassen sich mit dieser Technik sowohl Solarpanele auf vorteilhafte Weise im Weltraum entfalten, siehe GB 2 475 938 A, als auch Teile von Unterwasser-Messinstrumenten, wie etwa Datenspeicher, nach erfolgter Messung wieder an die Wasseroberfläche holen. Ebenso kommen derartige Hold Down-and-Release-Mechanismen in sicherheitsrelevanten Geräten zum Einsatz, die bei Eintritt einer Notsituation die Trennung einer Verbindung zwischen zwei Bauteilen erfordern. In diesem Zusammenhang stellen etwa Brandschutztüren, spezielle Rettungsmittel oder Sicherungsschleusen weitere mögliche Anwendungsfälle dar.

Mit ihrer Funktion zur Sicherung von beweglichen Komponenten sind Hold Down-and-Release-Mechanismen üblicherweise von erheblicher Bedeutung für die gesicherte Komponente, wobei eine Verbindung mit bekannter Steifigkeit und Festigkeit hergestellt wird. Durch Einsatz von Hold Down-and-Release-Mechanismen, die den zu erwartenden Kräften und Drehmomenten standhalten, können die beweglichen Komponenten effizienter konstruiert werden, wodurch die Gesamtmasse verringert wird, was insbesondere in der Raumfahrt einen erheblichen Einfluss auf die Wirtschaftlichkeit hat.

Der Start eines Raumfahrzeugs führt zu erheblichen Belastungen der mitgeführten Instrumente und Geräte, wobei zumindest einige dieser Gegenstände erst zu einem späteren Zeitpunkt nach dem Start bewegt oder positioniert werden müssen. So müssen etwa Antennenarrays, Solarpanele, ausfahrbare Masten und ähnliche Geräte, die erst im Weltraum in eine Arbeitsposition bewegt werden, während des Startvorgangs gesichert werden, um den hierbei auftretenden Belastungen sicher standzuhalten. Nach Erreichen der Einsatzposition werden die entsprechenden Lösemechanismen betätigt und so das zunächst während der Startphase befestigte Gerät in die gewünschte Position gebracht.

Ein rücksetzbarer Mechanismus zum lösbaren Sichern von Komponenten eines Raumfahrzeugs während des Starts ist etwa aus der WO 2018/112637 A1 bekannt. Auch in diesem Fall wird ein Hold-and-Release-Mechanismus verwendet, um bestimmte Komponenten während des Starts eines Raumfahrzeuges sicher zu fixieren und später gezielt freizugeben, sodass sich diese in eine Arbeitsposition bewegen können. Wesentlich an der beschriebenen technischen Lösung ist, dass während der Freigabe nur sehr geringe Stoßkräfte auf die zuvor gesicherten Komponenten übertragen werden. Dies ist wichtig, da die sich bewegenden Bauteile im Weltraum und damit in der Schwerelosigkeit eingesetzt werden.

Der beschriebene stoßfreie Freigabemechanismus verwendet Keilelemente, die nach der Aktivierung des Trennmechanismus eine Bewegung der Halteelemente unterschiedlicher Bauteilkomponenten entlang einer schiefen Ebene ermöglichen. Im Weiteren ist von Bedeutung, dass der Trennmechanismus nach erfolgtem Lösevorgang wieder in den Ausgangszustand zurückversetzt werden kann.

Im Weiteren ist aus dem Projekt MOVE der Technischen Universität München, Lehrstuhl für Raumfahrttechnik, ein Hold-and-Release-Mechanismus bekannt, der über eine Klammer verfügt, die konisch geformte Halteelemente fixiert. Die Klammer wird mithilfe eines als Schmelzdraht ausgeführten Haltedraht geschlossen. Zum Öffnen wird eine Spannung an den Draht angelegt, der schließlich aufgrund der Wärmeentwicklung reißt, sodass sich die Klammer durch die freigesetzte Federkraft öffnet.

Im Übrigen ist der NEA^{®}-Hold-and-Release-Mechanismus der Firma EBAD (Ensign-Bickford Aerospace and Defense) bekannt, der über einen elektrisch initiierten, einstufigen Auslösemechanismus, der eine vergleichsweise hohe Vorspannung tragen kann, verfügt. In diesem Fall wird die Vorspannung durch eine Auslösestange aufgebracht, die von zwei trennbaren Spulenhälften gehalten wird, die ihrerseits durch einen dicht aufgewickelten Haltedraht zusammengehalten werden. Der Haltedraht wird wiederum durch redundante elektrische Sicherungsdrähte festgehalten.

Zum Auslösen wird eine Spannung an die Sicherungsdrähte angelegt, sodass diese bei ausreichend großem Strom reißen, der Haltedraht von den Spulenhälften abgewickelt wird und sich schließlich die Spulenhälften und die Auslösestange getrennt.

Um die erforderliche Haltekraft sicher aufnehmen zu können und ein vorzeitiges Reißen zu vermeiden, müssen die jeweils als Schmelzdraht ausgeführten Sicherungsdrähte einen vergleichsweise großen Durchmesser aufweisen. Dies führt dazu, dass der Energiebedarf für das auf Schmelzen der Drähte im Vergleich zu anderen Systemen ebenfalls groß ist.

Ausgehend von den aus dem Stand der Technik bekannten technischen Lösungen sowie den zuvor geschilderten Problemen liegt der Erfindung die Aufgabe zu Grunde, eine Einheit zum lösbaren Verbinden zweier Bauteile bereitzustellen, die einerseits eine sichere Befestigung des zu fixierenden Bauteils gewährleistet und andererseits unter Einsatz von möglichst wenig Energie das sichere und zuverlässige Trennen der zunächst verbundenen Bauteilelemente ermöglicht. Da die beschriebenen trennbaren Verbindungen zumindest zum großen Teil in der Raumfahrt oder in sicherheitsrelevanten Bauteilen eingesetzt werden und bei einem Ausfall des Trennmechanismus regelmäßig das Gerät, in dem der Mechanismus verbaut ist, nicht einsatzfähig ist, ist ferner ein ausfallsicherer Betrieb des anzugebenden Trennmechanismus von besonderer Bedeutung. Im Weiteren sollte ein Trennmechanismus derart ausgeführt sein, dass in ungelöstem Zustand vergleichsweise große Kräfte, die beispielsweise durch Erschütterungen, Vibrationen oder Stöße verursacht werden, sicher aufgenommen werden. Ferner soll sich die anzugebende technische Lösung durch einen verhältnismäßig einfachen konstruktiven Aufbau, der nur den Einsatz weniger möglichst einfach gestalteter Komponenten erfordert, auszeichnen.

Die zuvor beschriebene Aufgabe wird in einer Verbindungseinheit gemäß Anspruch 1 gelöst. Erfindungsgemäße Verwendungen der Verbindungseinheit sind in den Ansprüchen 8 und 9 angegeben. Ferner sind im Anspruch 10 ein Gegenstand und im Anspruch 11 ein Verfahren zum Lösen einer Verbindung angegeben, durch die jeweils die der Erfindung zu Grunde liegende Aufgabe gelöst wird. Vorteilhafte Ausführungsformen der Erfindung sind Gegenstand der abhängigen Ansprüche und werden in der folgenden Beschreibung unter teilweiser Bezugnahme auf die Figuren näher erläutert.

Die Erfindung betrifft eine Verbindungseinheit, die ein erstes und ein zweites Halteelement aufweist, die zumindest zeitweise über eine Kopplungseinheit entgegen einer in zumindest eines der Halteelemente eingeleitete Auswurfkraft miteinander verbunden sind und die jeweils eingerichtet sind, um mit unterschiedlichen Bauteilen verbunden oder verbindbar zu sein. Die Haltelemente können somit auf vorteilhafte Weise entweder mittels geeigneter Befestigungselemente an unterschiedlichen Bauteilen, die in einer gewünschten Position relativ zueinander fixiert werden sollen, befestigt werden oder aber integraler Bestandteil unterschiedlicher Bauteile sein. Hierbei weist die Kopplungseinheit einen Trennmechanismus auf, bei dessen Aktivierung die Verbindung zwischen dem ersten und dem zweiten Halteelement getrennt wird und so eine Relativbewegung zwischen den unterschiedlichen Bauteilen erfolgen kann.

Erfindungsgemäß zeichnet sich die Verbindungseinheit dadurch aus, dass die Kopplungseinheit über ein Sperrelement und eine Arretierungseinheit verfügt, wobei das Sperrelement wenigstens teilweise relativ zum ersten und zum zweiten Halteelement bewegbar, bevorzugt axial bewegbar angeordnet ist und von der Arretierungseinheit in verbundenem Zustand des ersten und des zweiten Halteelements in einer Verriegelungsposition gehalten wird, in der die eingeleitete Auswurfkraft über das Sperrelement von dem zweiten Halteelement auf das erste Halteelement übertragen wird. Hierbei bewegt die Arretierungseinheit das Sperrelement bei Aktivierung des Trennmechanismus derart aus der Verriegelungsposition, dass die Verbindung zwischen dem ersten und dem zweiten Haltelement getrennt wird. Die Arretierungseinheit ist somit derart gestaltet, dass das Sperrelement, das in der Verriegelungsposition wenigstens teilweise der Kraftübertragung zwischen den Halteelementen dient, einerseits sicher in der Verriegelungsposition gehalten wird und andererseits sich bei Bedarf schnell und zuverlässig aus der Verriegelungsposition in eine weitere Position bewegt, sodass aufgrund der wirkenden Auswurfkraft eine Relativbewegung zwischen den Halteelementen erfolgt. Mit Hilfe einer derart ausgeführten Verbindungseinheit ist es nicht nur möglich, zwei Bauteile bedarfsgerecht, insbesondere ferngesteuert und/oder automatisiert, voneinander zu trennen, sondern auch, verhältnismäßig große Kräfte zwischen den beiden Halteelementen zu übertragen. Dies wird vor allem dadurch erreicht, dass ein bewegbar gelagertes Sperrelement vorgesehen ist, das die in zumindest eines der Halteelemente eingeleitete Auswurfkraft derart auf das andere Halteelement überträgt, dass in der Verriegelungsposition eine Relativbewegung zwischen erstem und zweitem Halteelement ausgeschlossen ist.

Bei der Auswurfkraft handelt es sich um eine Kraft, beispielsweise eine Federkraft, durch die nach Aktivierung des Trennmechanismus, eine Relativbewegung zwischen den beiden Halteelementen hervorrufen soll, insbesondere ein an einem der Halteelemente befestigtes Bauteil in eine Arbeitsposition bewegt werden soll. Vorzugsweise wird die Auswurfkraft durch ein Federelement, das auf eines der beiden Halteelemente eine Zug- oder Druckkraft ausübt, oder aber durch ein anderes Element, dessen Gewichtskraft etwa auf eines der Halteelemente wirkt, in eines der Halteelemente eingeleitet. In diesem Zusammenhang ist es denkbar, dass die Auswurfkraft durch eine Gewichtskraft eines Bauteils verursacht wird, das bei Eintritt eines bestimmten Ereignisses und Aktivierung des Trennmechanismus in eine speziell vorgesehen Betriebs- und/oder Notfallstellung überführt werden soll. Beispielsweise ist es möglich, eine erfindungsgemäß ausgeführte Verbindungseinheit an einer Brandschutztür vorzusehen, die im Brandfall automatisch verschlossen werden soll.

Unabhängig davon, welche Art der Auswurfkraft gewählt wird, ist es erfindungswesentlich, dass die in verbundenem Zustand der Halteelemente in wenigstens eines der Halteelemente eingebrachte Auswurfkraft, die durch weitere wenigstens zeitweise betriebsbedingt auftretende Kräfte, etwa durch Beschleunigungen und/oder Vibrationen hervorgerufen, ergänzt sein kann, über das Sperrelement, das durch die Arretierungseinheit in seiner Verriegelungsposition gehalten wird, von einem der Halteelemente in das jeweils andere Halteelement übertragen wird. Es wird somit verhindert, dass Kräfte, die eine Trennung der Halteelemente und ggf. der mit diesen verbundenen Bauteile, verursachen würden, nicht oder nur in geringem Maß auf die das Sperrelement in der Verriegelungsposition haltende und erst bei Bedarf freigebende Arretierungseinheit einwirken. Vor allem die Arretierungseinheit kann daher zumindest weitgehend ohne Berücksichtigung der eine Trennung der verbundenen Halteelemente bewirkenden Kräfte gestaltet und/oder dimensioniert werden.

Gemäß einer besonderen Ausführungsform der Erfindung verfügt das Sperrelement über einen bewegbar angeordneten Formkörper mit einer Raststruktur und zumindest ein Rastelement, das wenigstens teilweise innerhalb der Raststruktur aufnehmbar ist. Auf vorteilhafte Weise ist das Sperrelement derart ausgeführt, dass das Rastelement relativ zum Formkörper bewegbar ist und zumindest teilweise dann in der Raststruktur aufgenommen wird, sobald der Trennmechanismus aktiviert wurde und eine Relativbewegung zwischen den Halteelementen erfolgen soll. Befindet sich das Sperrelement in der Verriegelungsposition ist das Rastelement zumindest teilweise derart außerhalb der Raststruktur des Formkörpers angeordnet, dass die Auswurfkraft, unter Umständen ergänzt durch weitere Kräfte, über das Rastelement von einem der Halteelemente auf das andere Halteelement übertragen wird. Eine Übertragung der Auswurfkräfte kann hierbei mittelbar oder unmittelbar über das Rastelement erfolgen, wobei es von Vorteil ist, wenn das Rastelement in der Verriegelungsposition wenigstens teilweise wohl an dem ersten als auch an dem zweiten Halteelement anliegt. In der Verriegelungsposition wird so trotz Auftreten der Auswurfkraft und eventuell weiterer Kräfte, die eine Trennung der Halteelemente bewirken würden, eine Relativbewegung der beiden Halteelemente zueinander zuverlässig vermieden.

Bei einer speziellen Weiterbildung ist vorgesehen, dass der Formkörper mit seiner Raststruktur sowie das Rastelement derart ausgeführt sind, dass sich nach einer Aktivierung des Trennmechanismus das Rastelement wenigstens teilweise in die Raststruktur des Formkörpers bewegt. Aufgrund dieser Bewegung des Rastelements in die Raststruktur, die vorzugsweise durch eine geeignete Bewegung des Formkörpers mit seiner Raststruktur initiiert wird, wird der Kraftfluss zwischen den wenigstens zwei Halteelementen unterbrochen, sodass daraufhin eine durch die Auswurfkraft bedingte Relativbewegung zwischen dem ersten und zweiten Halteelement erfolgt.

Erfindungsgemäß weist die Arretierungseinheit ein Fixierungselement auf, das das Sperrelement entgegen einer Auswurfkraft in der Verriegelungsposition hält und zwar solange, wie keine Relativbewegung zwischen dem ersten und dem zweiten Halteelement stattfinden soll. Vorzugsweise ist die Arretierungseinheit derart ausgebildet, dass das Fixierungselement den Formkörper des Sperrelements solange wie erforderlich in der Verriegelungsposition hält und bei einer Aktivierung des Trennmechanismus derart gelöst wird, dass sich der Formkörper aufgrund der auf ihn einwirkenden Auswurfkraft in eine Bewegung versetzt wird. Generell ist es unerheblich, wie das Fixierungselement ausgeführt ist, um das Sperrelement sicher in der Verriegelungsposition zu halten. Erfindungsgemäß verfügt das Fixierungselement über einen Draht und/oder ein Band, die jeweils das Sperrelement in der Verriegelungsposition halten und bei Aktivierung des Trennmechanismus aufgrund einer vom Trennmechanismus ausgeübten Kraft wenigstens teilweise zerstört werden. Gemäß einer nicht beanspruchten Ausführungsform verfügt das Fixierungselement über eine Mutter. Gemäß einer speziellen Weiterbildung ist das Fixierungselement als Schmelzdraht ausgeführt, der das Sperrelement in der Verriegelungsposition hält und den bei Aktivierung des Trennmechanismus eine Spannung angelegt wird, sodass sich der Schmelzdraht aufgrund des durch ihn fließenden Stroms erhitzt und schließlich reißt. Hierfür verfügt der Trennmechanismus über eine geeignete Spannungsquelle oder ist mit einer solchen verbindbar, die bei Aktivierung des Trennmechanismus bevorzugt ferngesteuert und/oder automatisiert eingeschaltet wird.

Alternativ oder in Ergänzung ist es denkbar, dass das Fixierungselement bei Aktivierung des Trennmechanismus elektrisch, elektromechanisch pneumatisch und/oder hydraulisch derart bewegt wird, dass sich das Sperrelement daraufhin zumindest teilweise aufgrund der wirkenden Auswurfkraft aus der Verriegelungsposition bewegt wird.

In diesem Zusammenhang ist es etwa denkbar, dass das Fixierungselement einen bewegbaren Anschlag aufweist, gegen den das in der Verriegelungsposition angeordnete, von der Auswurfkraft beaufschlagte Sperrelement gedrückt oder gezogen wird. Bei Aktivierung des Trennmechanismus wird der Anschlag derart bewegt, dass sich das Sperrelement aus der Verriegelungsposition herausbewegen kann. Gemäß dieser besonderen Ausgestaltung der Erfindung verfügt der Trennmechanismus über wenigstens ein elektrisches, elektromechanisches, pneumatisches und/oder hydraulisch wirkendes Antriebsmittel, das bei Aktivierung auf das Fixierungselement einwirkt.

Auf besonders vorteilhafte Weise wird die Auswurfkraft, durch die das Sperrelement bei Aktvierung des Trennmechanismus aus der Verriegelungsposition bewegt wird, mit Hilfe eines Auslöseelements der Arretierungseinheit erzeugt. Vorzugsweise verfügt das Auslöseelement über wenigstens ein Federelement, insbesondere eine Spiralfeder, das vorgespannt ist, wenn sich das Sperrelement in der Verriegelungsposition befindet, und das nach Aktivierung des Trennmechanismus und Lösen des Fixierungselements eine Federkraft, bevorzugt eine Druckkraft, auf das Sperrelement ausübt, das sich dadurch aus der Verriegelungsposition herausbewegt.

In einer weiteren speziellen Ausgestaltung der Erfindung ist vorgesehen, dass eines der Halteelemente ein in Bezug auf seine Längsachse symmetrisch ausgeführtes Führungselement aufweist, in dessen Inneren wenigstens ein Teil des Sperrelements bewegbar gelagert ist und/oder entlang dessen Außenfläche das jeweils andere Halteelement bewegbar gelagert ist. Gemäß dieser speziellen Ausführungsform verfügt eines der Haltelemente über ein Führungselement, das besonders bevorzugt einen Kanal aufweist, in dem das Sperrelement nach Aktivierung des Trennmechanismus relativ zum Führungselement bewegt wird. Vorzugsweise ist das Führungselement rotationssymmetrisch, etwa als Rohrstück, ausgeführt, in dem ein kolbenartig ausgeführter Formkörper des Sperrelements in Längsrichtung bewegbar gelagert ist. Solange die beiden Halteelemente verbunden sein sollen, wird der im Inneren des Führungselementes angeordnete Teil des Sperrelements auf vorteilhafte Weise durch ein Fixierungselement entgegen einer auf ihn wirkenden Auswurfkraft in der Verriegelungsposition gehalten. Bei Aktivierung des Trennmechanismus wird das Fixierungselement gelöst und der im Inneren des Führungselements gelagerte Teil des Sperrelements aufgrund der einwirkenden Auswurfkraft relativ zum Führungselement bewegt. Auf besonders bevorzugte Weise wird aufgrund dieser Bewegung die Verbindung zwischen dem ersten und dem zweiten Halteelement getrennt.

Gemäß einer besonderen Weiterbildung verfügt das Führungselement über eine geeignete Kontur zur Führung eines Rastelements, das nach Aktivierung des Trennmechanismus zumindest zeitweise in eine Raststruktur des bewegbaren Formkörpers des Sperrelements eingleitet wird. Die Kontur ist auf vorteilhafte Weise derart ausgebildet, dass, solange sich das Sperrelement in der Verriegelungsposition befindet, das in der Kontur angeordnete Rastelement eine Kraft zwischen den beiden Halteelementen überträgt. Erst nach Aktivierung des Trennmechanismus wird dieser Kraftfluss zwischen den Halteelementen aufgrund einer Bewegung des Sperrelements, insbesondere eines Formkörpers mit Raststruktur und eines geeignete geformten Rastelementes, unterbrochen und die Verbindung zwischen den Halteelementen getrennt. Vorzugsweise ist die Kontur des Führungselements als Ausnehmung, insbesondere als Durchgangsbohrung ausgeführt, innerhalb der das Rastelement, etwa in Form einer Kugel oder eines Stifts bzw. Zylinders, zwischen wenigstens zwei Stellungen bewegbar ist. In der Verriegelungsposition des Sperrelements befindet sich das Rastelement in einer Stellung außerhalb der Raststruktur und bevorzugt wenigstens teilweise innerhalb der Raststruktur zumindest des Halteelements, auf das zumindest die Auswurfkraft wirkt. Die auf dieses Halteelement wirkende Auswurfkraft wird auf diese Weise auf das Rastelement und von diesem auf das zweite Halteelement übertragen, sodass eine Relativbewegung zwischen den beiden Halteelementen sicher ausgeschlossen wird.

In seiner zweiten Stellung innerhalb der Kontur des Führungselements befindet sich das Rastelement nach Aktivierung des Trennmechanismus nicht mehr innerhalb der Raststruktur des Halteelements, sondern in der Raststruktur des innerhalb des Führungselements bewegbar angeordneten Sperrelements, sodass sich das Halteelement mit seiner Raststruktur aufgrund der einwirkenden Auswurfkraft relativ zum anderen Halteelement mit dem Führungselement bewegt.

In einer weiteren speziellen Ausgestaltung der Erfindung ist ein Auswurfelement, insbesondere in Form eines elastischen Elements, vorgesehen und derart angeordnet, dass die Auswurfkraft, die nach Aktivierung des Trennmechanismus eine Bewegung wenigstens eines der Halteelemente bewirken soll, von dem Auswurfelement auf eines der beiden Halteelemente ausgeübt wird. In verbundenem Zustand des ersten und des zweiten Halteelements wird die Auswurfkraft von dem Auswurfelement auf eines der beiden Halteelemente ausgeübt und von diesem auf das andere Halteelement übertragen, sodass keine Relativbewegung zwischen den Halteelementen erfolgt. Die Auswurfkraft wird in verbundenem Zustand der beiden Halteelemente wiederum wenigstens teilweise über das Sperrelement, insbesondere über ein bewegbar angeordnetes Rastelement des Sperrelements, das zwischen dem ersten und dem zweiten Halteelement angeordnet ist, übertragen.

Das Auswurfelement verfügt vorzugsweise über wenigstens ein Feder-, Schaumstoff oder Gummielement, das in verbundenem Zustand der Halteelemente, also wenn sich das Sperrelement in Verriegelungsposition befindet, derart vorgespannt ist, dass aufgrund einer Aktivierung des Trennmechanismus und das Lösen der von der Arretierungseinheit verursachten Arretierung des Sperrelements, diese Vorspannung löst und so die Auswurfkraft in eines der Halteelemente eingeleitet wird, sodass dieses bewegt wird bzw. es zu einer Relativbewegung zwischen den Halteelementen kommt. Bevorzugt ist ein derartiges elastisches Element als Federelement, ganz besonders bevorzugt als Spiralfeder ausgeführt, die wenigstens zeitweise eine Druckkraft auf eines der beiden Halteelemente ausübt. Gemäß einer speziellen Weiterbildung der Erfindung ist das Auswurfelement, insbesondere ein Federelement, außerhalb eines Führungselementes zumindest eines der Halteelemente angeordnet. Besonders bevorzugt umgibt das Auswurfelement das Führungselement und ist hierdurch in seiner Position und Ausrichtung fixiert.

Im Übrigen sieht die Erfindung eine bevorzugte Verwendung einer Verbindungseinheit, die gemäß zumindest einer der zuvor beschriebenen Ausführungsform ausgebildet ist, vor, bei der ein Bauteil bei Eintritt eines speziellen Ereignisses, insbesondere Erreichen einer bestimmten Position oder in einem Notfall, aus einem ersten in einen zweiten Betriebszustand überführt wird. Auf besonders vorteilhafte Weise lässt sich eine erfindungsgemäß ausgeführte Verbindungseinheit zum Ausklappen eines Solarpanels oder eines sonstigen Funktionselements eines in den Weltraum verbrachten Geräts verwenden. Bei Erreichen der hierfür vorgesehenen Position im Weltraum wird der Trennmechanismus aktiviert und das bis dahin am Raumfahrzeug fixierte Gerät in seine Arbeitsposition bewegt.

Darüber hinaus ist es denkbar, eine erfindungsgemäß gestaltete Verbindungseinheit etwa zum Schließen einer Notfalltür, eines Notfalltores oder einer Notfallschleuse bei Eintritt eines Notfalls, beispielsweise eines Brandes oder eines Wassereinbruchs auf einem Schiff, einzusetzen. Ebenso kann eine derartige Verbindungseinheit zum zielgerichteten Lösen eines Rettungsbootes und/oder einer Rettungsinsel eines Schiffes oder bei einer sonstigen Rettungseinrichtung bei Eintritt eines Notfalls verwendet werden. In diesem Zusammenhang ist es denkbar, dass der Trennmechanismus wahlweise automatisch bei Eintritt eines zuvor bestimmten Ereignisses oder durch manuelle, insbesondere ferngesteuerte Betätigung durch eine Bedienperson aktiviert wird.

Darüber hinaus betrifft die Erfindung auch einen Gegenstand mit einem ersten und einem zweiten Bauteilelement, die wenigstens zeitweise mit einer Verbindungseinheit, welche gemäß wenigstens einer der zuvor beschrieben Ausführungsformen ausgebildet ist, miteinander verbunden sind, wobei das erste und das zweite Halteelement entweder über geeignete Befestigungselemente jeweils am ersten und dem zweiten Bauteilelement befestigt sind oder zumindest eines der Halteelemente einteilig mit dem ersten und/oder dem zweiten Bauteilelement ausgebildet ist. Es ist somit generell denkbar, dass das erste und das zweite Halteelement einer erfindungsgemäß ausgeführten Verbindungseinheit jeweils an unterschiedlichen Bauteilelementen, die bei Eintritt eines vorgegebenen Ereignisses relativ zueinander bewegt werden sollen, befestigt sind, beispielsweise mittels einer Schraub-, Schweiß oder Lötverbindung, oder aber, dass wenigstens einer der Halteelemente integraler Bestandteil eines im Bedarfsfall bewegbaren Bauteilelementes ist.

Im Weiteren betrifft die Erfindung auch ein Verfahren zum Lösen von zwei über eine Kopplungseinheit entgegen einer Auswurfkraft über Halteelemente miteinander verbundenen Bauteilelementen, wobei die Kopplungseinheit über ein Sperrelement, das wenigstens teilweise relativ zu den beiden Halteelementen bewegbar ist, und eine Arretierungseinheit verfügt und in verbundenem Zustand des ersten und des zweiten Halteelements die Arretierungseinheit das Sperrelement in einer Verriegelungsposition hält. In dieser Verriegelungsposition wird die Auswurfkraft über das Sperrelement von dem ersten Halteelement auf das zweite Halteelement übertragen, während bei Aktivierung des Trennmechanismus die Arretierungseinheit das Sperrelement derart aus der Verriegelungsposition bewegt, dass die Verbindung zwischen dem ersten und dem zweiten Haltelement getrennt wird. Mithilfe des erfindungsgemäßen Verfahrens ist es somit möglich, zwei Halteelemente, an denen bevorzugt jeweils ein Bauteil befestigt ist, zu lösen, sodass zumindest eines der beiden Halteelemente bzw. Bauteilelemente bei Eintritt eines vorgegebenen Ereignisses aufgrund der eingeleiteten Auswurfkraft in die gewünschte Betriebsposition bewegt wird. Vorzugsweise verfügt die Arretierungseinheit einerseits über wenigstens ein Fixierungselement, das das Sperrelement solange wie erforderlich in der Verriegelungsposition hält, und andererseits über zumindest ein Auslöseelement, das derart ausgeführt ist, das bei Aktivierung des Trennmechanismus das Sperrelement aus der Verriegelungsposition herausbewegt wird und daher eine Relativbewegung zwischen den beiden Halteelementen sowie den daran befestigten Bauteilelementen einstellt.

In einer besonderen Ausgestaltung des erfindungsgemäßen Verfahrens ist vorgesehen, dass das Sperrelement über einen Formkörper mit einer Raststruktur und wenigstens ein Rastelement verfügt, wobei in verbundenem Zustand des ersten und des zweiten Halteelements das Rastelement derart angeordnet wird, dass eine Kraft vom ersten Haltelement, insbesondere von einer Raststruktur des ersten Halteelements, in dem das Rastelement zumindest teilweise angeordnet ist, über das Rastelement auf das zweite Halteelement übertragen wird und nach Aktivierung des Trennmechanismus das Rastelement derart relativ zum Formkörper bewegt und wenigstens teilweise in die Raststruktur des Formkörpers eingeführt wird, dass der Kraftfluss zwischen den beiden Halteelementen unterbrochen wird und eine Relativbewegung zwischen den beiden Halteelementen bzw. den jeweils daran befestigten Bauteilelementen erfolgt.

Im Weiteren ist es von Vorteil, wenn nach Aktivierung des Trennmechanismus das Sperrelements zumindest abschnittsweise innerhalb eines Führungselements, das einen Teil eines der beiden Halteelemente bildet, bewegt wird und/oder das andere Halteelement entlang einer Außenfläche des Führungselementes, das bevorzugt rohrförmig ausgebildet ist, gleitet.

Im Folgenden wird die Erfindung ohne Beschränkung des allgemeinen Erfindungsgedankens anhand von Ausführungsbeispielen unter Bezugnahme auf die Figuren näher erläutert. Dabei zeigen:
- Fig. 1:: Schnittansicht einer erfindungsgemäß ausgeführten Verbindungseinheit mit einem Sperrelement in Verriegelungsposition;
- Fig. 2:: Schematische Schnittansicht einer erfindungsgemäß ausgeführten Verbindungseinheit in drei verschiedenen Betriebssituationen sowie
- Fig. 3:: Schematische Darstellung eines Solarpanels mit erfindungsgemäß ausgeführter Verbindungseinheit in drei verschiedenen Betriebssituationen.

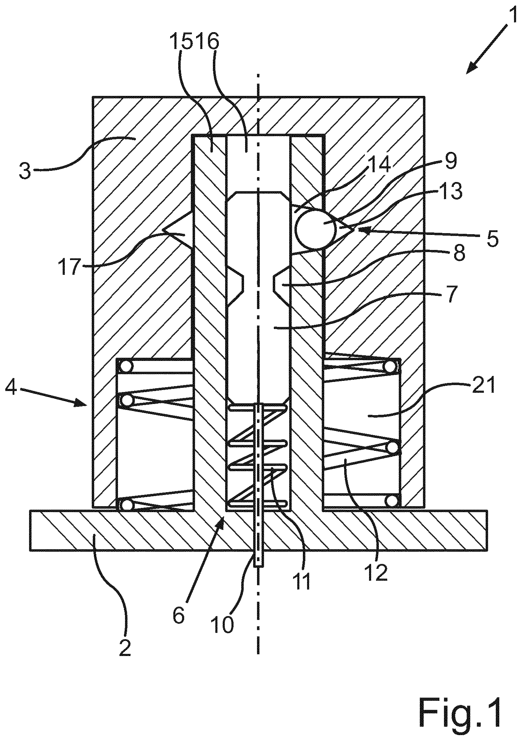

Fig. 1 zeigt eine Schnittansicht einer erfindungsgemäß ausgeführten Verbindungseinheit 1 mit einem Sperrelement 5, das sich in einer Verriegelungsposition befindet. Die Verbindungseinheit 1 verfügt über ein erstes und ein zweites Halteelement 2, 3, die relativ beweglich zueinander gelagert sind. Um den in Fig. 1 gezeigten Betriebszustand, in dem sich die beiden Halteelemente 2, 3 in verbundenem Zustand befinden, herzustellen, ist ein Sperrelement 5 vorgesehen, das von einer Arretierungseinheit 6 mit einem Fixierungselement 10 entgegen einer auf das zweite Halteelement 3 wirkenden Auswurfkraft in der Verriegelungsposition gehalten wird.

Die Auswurfkraft wird von einem das erste Halteelement 2 zumindest teilweise entlang seines Umfangs umgebenden elastischen Auswurfelement 12, hier in Form einer Spiralfeder, ausgeübt, wobei das Auswurfelement 12 in einem Zwischenraum 21 zwischen dem ersten und dem zweiten Halteelement 2, 3 angeordnet und vorgespannt ist.

Das erste Halteelement 2 ist rohrförmig, das zweite Halteelement 3 hülsenförmig ausgebildet, wobei der Außendurchmesser des ersten Halteelements 2 im oberen Bereich nur geringfügig kleiner als der Innendurchmesser des zweiten Halteelements 3 ist. Der rohrförmige Teil des ersten Halteelements 2 bildet somit ein Führungselement 15, das in seinem Inneren 16 über einen Kanal verfügt, in dem ein Teil des Sperrelements 5, der als kolbenförmiger Formkörper 7 mit spezieller Außenkontur ausgeführt ist, bewegbar gelagert ist, während die Außenfläche 17 des Führungselements 15 eine geführte Bewegung des zweiten Halteelements 3 relativ zum ersten Halteelement 2 ermöglicht. Auf diese Weise ist eine zumindest nahezu spielfreie Bewegung des ersten Halteelements 2 relativ zum zweiten Halteelement 3 möglich.

Um das Sperrelement 5 in der Verriegelungsposition zu halten, verfügt die Arretierungseinheit 6 über ein Fixierungselement 10, das gemäß der in Fig. 1 gezeigten Ausführungsform als Schmelzdraht ausgebildet ist und auf den Formkörper 7 des Sperrelements 5 eine entgegen der Auswurfkraft gerichtete Zugkraft ausübt. Der Schmelzdraht ist mit seinem einen Ende an dem Formkörper 7 und mit dem gegenüberliegenden Ende am ersten Halteelement 2 befestigt. Der Schmelzdraht ist an eine Spannungsquelle 22 angeschlossen, die bei Aktivierung des Trennmechanismus 4 derart angesteuert wird, dass der Schmelzdraht von einem Strom durchflossen wird, der seine Erwärmung und schließlich sein Reißen bewirkt.

Ferner verfügt der in Fig. 1 gezeigte Formkörper 7 des Sperrelements 5 über eine Raststruktur 8 und es ist ein zusätzliches, bewegbar angeordnetes Rastelement 9 vorgesehen, das nach Aktivierung des Trennmechanismus 4, dem hierdurch bedingten Lösen des Fixierungselements 10, hier dem Reißen des Schmelzdrahts, und der Bewegung des Formkörpers 7, die durch eine von einem Auslöseelement 11 in Form einer Spiralfeder verursachten Auslösekraft initiiert wird, in die Raststruktur 8 des Formkörpers 7 eingleitet. In Fig. 1 ist das Sperrelement 5 allerdings in seiner Verriegelungsposition gezeigt, in der sich das Rastelement 9 außerhalb der Raststruktur 8 befindet und derart angeordnet ist, dass über das Rastelement 9 ein Kraftfluss zwischen dem ersten und dem zweiten Halteelement 2, 3 hergestellt wird. Hierbei wird die mit Hilfe des in Form einer Feder ausgeführten Auswurfelements 12 in das zweite Halteelement 3 eingeleitete Auswurfkraft, die eine Druckkraft darstellt, von dem zweiten Halteelement 3 über das Rastelement 9 in das erste Halteelement 2 übertragen. Wesentlich für die gezeigte technische Lösung ist, dass die Auswurfkraft sowie eventuell zusätzlich auf das zweite Halteelement 3 einwirkende Kräfte nicht auf die Arretierungseinheit 6, insbesondere nicht auf das als Schmelzdraht ausgeführte Fixierungselement 10, wirken, sodass das Fixierungselement 10, in dieser Ausführungsform somit der Schmelzdraht, unabhängig von der Größe der vorgenannten Kräfte gestaltet und dimensioniert werden kann.

Gemäß dem in Fig. 1 gezeigten Ausführungsbeispiel ist das erste Halteelement 2 als Basisplatte mit einem Rohrstück bzw. als Standzylinder ausgeführt, auf den das zweite Halteelement 3, aufgeschoben wird. Da die von dem Auswurfelement 12 ausgehenden Auswurfkraft nicht auf die Arretierungseinheit 6 einwirkt, ist es möglich, vergleichsweise große Lasten an dem zweiten Halteelement 3 zu befestigen. Unter Einsatz der in Fig. 1 gezeigten Verbindungseinheit 1 lässt sich somit ein an dem zweiten Halteelement 3 befestigtes oder mit diesem verbundenes Bauteil, etwa die Antenne oder das Solarpanel eines Raumfahrzeugs, bei Eintritt eines vorgegebenen Ereignisses, wie dem Erreichen der gewünschten Flughöhe, in die benötigte Betriebsposition überführen.

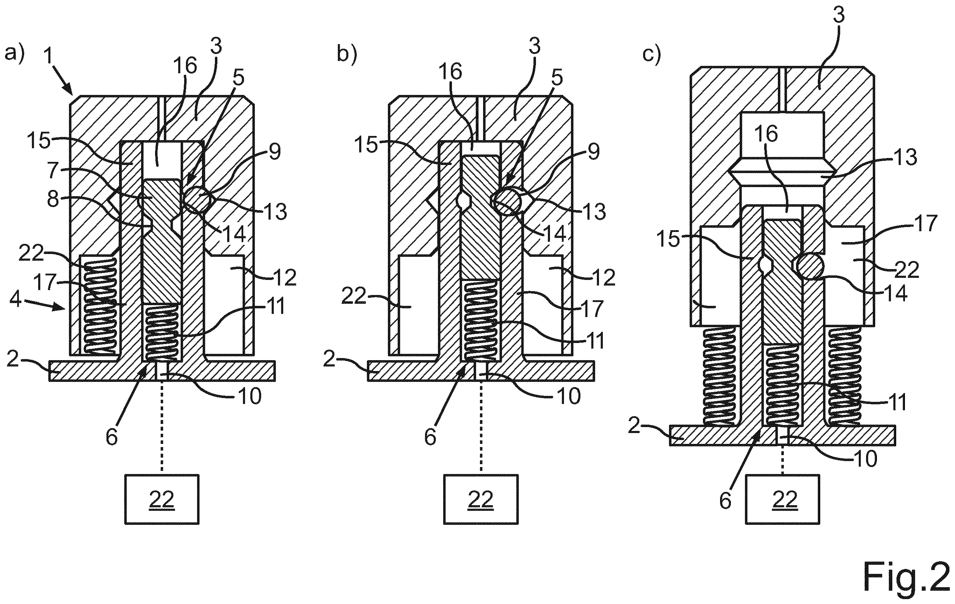

Ergänzend zu Fig. 1 zeigt Fig. 2 die schematische Schnittansicht einer erfindungsgemäß ausgeführten Verbindungseinheit 1 in drei verschiedenen Betriebszuständen. Fig. 1 a) zeigt einen Betriebszustand, in dem sich das erste und das zweite Halteelement 2, 3 in einem verbundenem Zustand befinden, in dem das Sperrelement 5 in seiner Verriegelungsposition angeordnet ist und die Auswurfkraft vom zweiten Halteelement 3 über das Rastelement 8 in das erste Halteelement 2 eingeleitet wird. Nach Aktivierung des Trennmechanismus 4 wird eine elektrische Spannung an das als Schmelzdraht ausgebildete Fixierungselement 10 angelegt, sodass aufgrund der Erwärmung der Schmelzdraht schließlich reißt. Nachdem das Fixierungselement 10 den Formkörper 7 des Sperrelements 5 nicht mehr hält, wird dieser durch die vom als Spiralfeder ausgeführten Auslöseelement 11 ausgehende Auslösekraft nach oben geschoben, sodass das Rastelement 9, hier in Form einer Kugel, die bewegbar in einer zylinderförmig ausgebildeten Durchgangsöffnung 14 im ersten Halteelement 2, angeordnet ist, in die Raststruktur 8 des Formkörpers 7 eingleitet. Die Bewegung des Rastelements 9 in die Raststruktur 8 des Formkörpers 7 wird durch die Bewegung des zweiten Halteelements 3 relativ zum ersten Halteelement 2 initiiert und sowohl durch eine geeignet geformte Raststruktur 13 im zweiten Halteelement 3 als auch die Kegelform der Durchgangsöffnung 14 im ersten Halteelement 2 begünstigt. Das Rastelement 9 wird so zuverlässig aus der Raststruktur 13 des zweiten Halteelements 3 in die Raststruktur 8 des Formkörpers 7 bewegt, sodass der in der Verriegelungsposition durch das Rastelement 9 hergestellte Kraftfluss zwischen dem zweiten und dem ersten Halteelement 3, 2 unterbrochen wird. Der Betriebszustand, in dem sich das Rastelement 9 nun teilweise innerhalb der Raststruktur 8 des Formkörpers 7 befindet und sich das zweite Halteelement 3 beginnt aufgrund der vom in Form einer Feder ausgeführten Auswurfelement 12 ausgeübten Auswurfkraft relativ zum ersten Halteelement 2 zu bewegen, ist n Fig. 1 b) dargestellt.

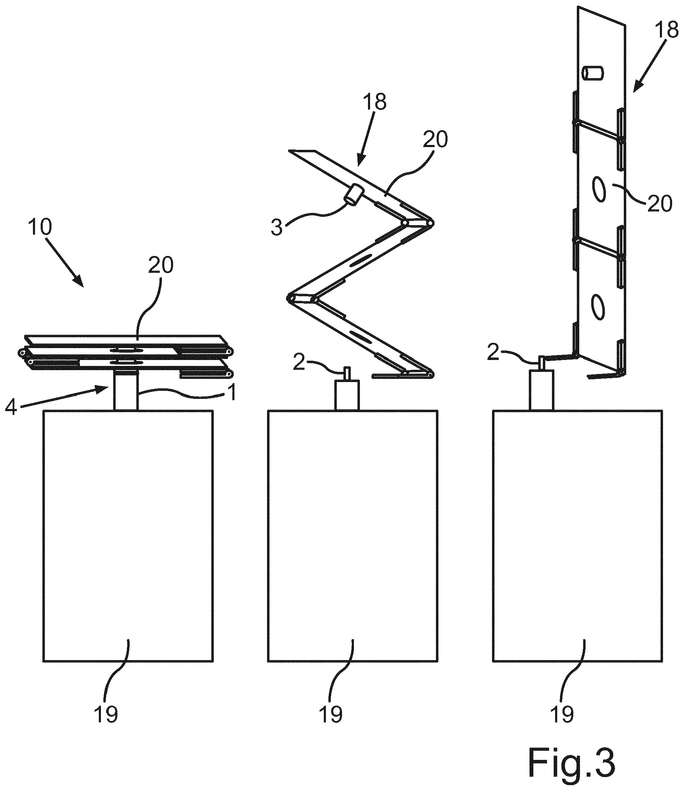

Im Weiteren zeigt Fig. 1 c) schließlich einen Betriebszustand, bei dem sich das zweite Halteelement 3 weiter nach oben bewegt und vollständig vom ersten Halteelement 2 getrennt hat. Vorzugsweise ist das erste Halteelement 2 mit einem ersten Bauteil 19 eines Gegenstandes 18, wie einem Arbeitsgerät oder einer größeren Baueinheit, die in dieser Ansicht nicht dargestellt, aber Fig. 3 zu entnehmen sind, verbunden oder daran befestigt, während das zweite Halteelement 3 mit einem zweiten Bauteil 20, insbesondere einem speziellen Funktionsbauteil oder einem Instrument, verbunden ist, das bei Eintritt eines speziellen Ereignisses und der daraufhin erfolgenden Aktivierung des Trennmechanismus 4 aus einer fixierten Betriebsposition, die etwa während eines Transports eingenommen wird, in eine bestimmte Arbeitsposition überführt wird.

Fig. 3 zeigt in einer schematischen Darstellung ein Solarpanel für ein Raumfahrzeug, etwa für einen Satellit, mit einer erfindungsgemäß ausgeführten Verbindungseinheit 1 in drei verschiedenen Betriebssituationen. Fig. 3 a) zeigt das Solarpanel in einem zusammengeklappten Betriebszustand, den das Solarpanel während des Starts und der Verbringung in den Weltraum einnimmt. Das erste Halteelement 2 der erfindungsgemäß ausgeführten Verbindungseinheit 1 ist an der Grundstruktur des Satelliten und das zweiten Halteelement 3 an dem faltbaren Solarpanel befestigt, wobei die beiden Halteelemente 2, 3 in dem in Fig. 3 a) gezeigten Betriebszustand noch miteinander verbunden sind.

Fig. 3 b) zeigt einen Betriebszustand, in dem der Trennmechanismus 4 bereits aktiviert und auf diese Weise die Verbindung zwischen dem ersten und dem zweiten Halteelement 2, 3 bereits gelöst wurde. Aufgrund der von dem Auswurfelement 12 ausgeübten Kraft wird das Solarpanel nun relativ zum ersten Halteelement 2 und somit der Grundstruktur des Satelliten bewegt und somit entfaltet.

Abschließend zeigt Fig. 3 c) einen Betriebszustand, in dem das Solarpanel vollständig entfaltet wurde und sich nun in der gewünschten Arbeitsposition befindet.

### Bezugszeichenliste

- 1: Verbindungseinheit
- 2: erstes Halteelement
- 3: zweites Halteelement
- 4: Trennmechanismus
- 5: Sperrelement
- 6: Arretierungseinheit
- 7: Formkörper
- 8: Raststruktur des Formkörpers
- 9: Rastelement
- 10: Fixierungselement
- 11: Auslöseelement
- 12: Auswurfelement
- 13: Raststruktur des zweiten Halteelements
- 14: Durchgangsöffnung
- 15: Führungselement
- 16: Innenraum des Führungselements
- 17: Außenfläche des Führungselements
- 18: Gegenstand
- 19: erstes Bauteil
- 20: zweites Bauteil
- 21: Zwischenraum
- 22: Spannungsquelle

## Patentansprüche

1. Verbindungseinheit (1), die ein erstes und ein zweites Halteelement (2, 3) aufweist, die zumindest zeitweise entgegen einer in zumindest eines der Halteelemente (2, 3) eingeleiteten Auswurfkraft miteinander verbunden sind und jeweils eingerichtet sind, um mit unterschiedlichen Bauteilen verbunden oder verbindbar zu sein, wobei ein Trennmechanismus (4) vorgesehen ist, bei dessen Aktivierung die Verbindung zwischen dem ersten und dem zweiten Halteelement (2, 3) getrennt wird, wobei der Trennmechanismus (4) ein Sperrelement (5), das wenigstens teilweise relativ zum ersten und zum zweiten Halteelement (2, 3) bewegbar angeordnet ist, und eine Arretierungseinheit (6) aufweist, wobei in verbundenem Zustand des ersten und des zweiten Halteelements (2, 3) das Sperrelement (5) von der Arretierungseinheit (6) in einer Verriegelungsposition gehalten wird, in der die eingeleitete Auswurfkraft über das Sperrelement (5) von dem zweiten Halteelement (3) auf das erste Halteelement (2) übertragen wird, und bei Aktivierung des Trennmechanismus (4) die Arretierungseinheit (6) das Sperrelement (5) derart aus der Verriegelungsposition bewegt, dass die Verbindung zwischen dem ersten und dem zweiten Haltelement (2, 3) getrennt wird, wobei die Arretierungseinheit (6) ein Fixierungselement (10) aufweist, das das Sperrelement (5) entgegen einer von einem Auslöseelement (11) ausgeübten Auslösekraft in der Verriegelungsposition hält, dadurch gelennzeichnet, dass das Fixierungselement (10) über einen Draht und/oder ein Band verfügt, der bzw. das bei Aktivierung des Trennmechanismus (4) aufgrund einer vom Trennmechanismus (4) ausgeübten Kraft wenigstens teilweise zerstört wird.

2. Verbindungseinheit nach Anspruch 1,
**dadurch gekennzeichnet, dass** das Sperrelement (5) über einen bewegbar angeordneten Formkörper (7) mit einer Raststruktur (8) und zumindest ein Rastelement (9), das wenigstens teilweise innerhalb der Raststruktur (8) aufnehmbar ist, verfügt.

3. Verbindungseinheit nach Anspruch 2,
**dadurch gekennzeichnet, dass** in verbundenem Zustand des ersten und des zweiten Halteelements (2, 3) eine Kraft über das Rastelement (9) von dem zweiten Halteelement auf das erste Halteelement übertragen wird.

4. Verbindungseinheit nach Anspruch 2 oder 3,
**dadurch gekennzeichnet, dass** sich nach einer Aktivierung des Trennmechanismus (4) das Rastelement (9) wenigstens teilweise in die Raststruktur (8) des Formkörpers (7) bewegt.

5. Verbindungseinheit nach Anspruch 1,
**dadurch gekennzeichnet, dass** das Fixierungselement (10) über ein bei Aktivierung des Trennmechanismus (4) elektrisch, elektromechanisch, pneumatisch und/oder hydraulisch bewegtes Anschlagelement verfügt.

6. Verbindungselement nach einem der vorangehenden Ansprüche,
**dadurch gekennzeichnet, dass** zumindest eines der Halteelemente (2, 3) ein in Bezug auf eine Längsachse symmetrisch ausgeführtes Führungselement (15) aufweist, in dessen Innenraum (16) wenigstens ein Teil des Sperrelements (5) bewegbar gelagert ist und/oder entlang dessen Außenfläche (17) das jeweils andere Halteelement (3, 2) bewegbar gelagert ist.

7. Verbindungseinheit nach einem der vorangehenden Ansprüche,
**dadurch gekennzeichnet, dass** ein elastisches Auswurfelement (12) vorgesehen und derart angeordnet ist, dass in verbundenem Zustand des ersten und des zweiten Halteelements (2, 3) eine von dem elastischen Auswurfelement (12) ausgeübte Auswurfkraft wenigstens teilweise über das Sperrelement (5) von dem zweiten Haltelement (3) auf das erste Halteelement (2) übertragen wird.

8. Verwendung einer Verbindungseinheit (1) nach einem der vorangehenden Ansprüche, um ein Bauteil bei Eintritt eines Ereignisses von einem ersten in einen zweiten Betriebszustand zu überführen.

9. Verwendung einer Verbindungseinheit (1) nach einem der Ansprüche 1 bis 7, zum Ausklappen eines Solar-Panels oder eines sonstigen Funktionselements eines in den Weltraum verbrachten Geräts, zum Schließen einer Notfalltür oder eines Tors bei Eintritt eines Notfalls und/oder zum Lösen eines Rettungsbootes oder einer Rettungsinsel eines Schiffes oder einer sonstigen Rettungseinrichtung bei Eintritt eines Notfalls.

10. Gegenstand (18) mit einem ersten und einem zweiten Bauteil (19, 20), die wenigstens zeitweise mit einer Verbindungseinheit (1) gemäß wenigstens einem der Ansprüche 1 bis 7 miteinander verbunden sind, wobei das erste und das zweite Halteelement (2, 3) entweder über geeignete Befestigungselemente jeweils am ersten und dem zweiten Bauteil (19, 20) befestigt sind oder jeweils einteilig mit dem ersten und dem zweiten Bauteil (19, 20) ausgeführt sind.

11. Verfahren zum Lösen zweier entgegen einer Auswurfkraft miteinander verbundener Halteelemente (2, 3) und/oder an den Halteelementen jeweils befestigter Bauteile (19, 20), wobei ein Trennmechanismus mit einem Sperrelement (5), das wenigstens teilweise relativ zu den beiden Halteelementen (2, 3) bewegt wird, und eine Arretierungseinheit (6) vorgesehen sind, wobei in verbundenem Zustand des ersten und des zweiten Halteelements (2, 3) die Arretierungseinheit (6) das Sperrelement (5) in einer Verriegelungsposition hält, in der die Auswurfkraft über das Sperrelement (5) von dem zweiten Halteelement (3) auf das erste Halteelement (2) übertragen wird, und bei Aktivierung des Trennmechanismus (4) die Arretierungseinheit (6) das Sperrelement (5) derart aus der Verriegelungsposition bewegt, dass die Verbindung zwischen dem ersten und dem zweiten Haltelement (2, 3) getrennt wird, wobei die Arretierungseinheit (6) ein Fixierungselement (10) aufweist, das das Sperrelement (5) entgegen einer von einem Auslöseelement (11) ausgeübten Auslösekraft in der Verriegelungsposition hält, und wobei das Fixierungselement (10) über einen Draht und/oder ein Band verfügt, der bzw. das bei Aktivierung des Trennmechanismus (4) auf-grund einer vom Trennmechanismus (4) ausgeübten Kraft wenigstens teilweise zerstört wird.

12. Verfahren nach Anspruch 11,
**dadurch gekennzeichnet, dass** das Sperrelement (5) über einen Formkörper (7) mit einer Raststruktur (8) und wenigstens ein Rastelement (9) verfügt, wobei in verbundenem Zustand des ersten und des zweiten Halteelements (2, 3) das Rastelement (9) derart angeordnet wird, dass eine Kraft vom zweiten Haltelement (3) über das Rastelement (9) auf das erste Halteelement (2) übertragen wird und nach Aktivierung des Trennmechanismus (4) das Rastelement (9) derart relativ zum Formkörper (7) bewegt und wenigstens teilweise in die Raststruktur (8) des Formkörpers (7) eingeführt wird, dass zwischen den beiden Halteelementen (2, 3) keine Kraft über das Rastelement (9) übertragen wird.

13. Verfahren nach Anspruch 11 oder 12,
**dadurch gekennzeichnet, dass** nach Aktivierung des Trennmechanismus (4) wenigstens ein Teil des Sperrelements (5) in einem Innenraum (16) eines Führungselements (15) eines der beiden Halteelemente (2, 3) bewegt wird und sich das jeweils andere Halteelement (3, 2) entlang einer Außenfläche (17) des Führungselements (15) bewegt.

## Claims

1. A connecting unit (1) comprising a first and a second holding element (2, 3), which are at least temporarily connected with one another against an ejection force introduced into at least one of the holding elements (2, 3) and are respectively configured to be connected or connectable to different components, wherein a disconnecting mechanism (4) is provided, upon activation of which the connection between the first and the second holding element (2, 3) is disconnected,
wherein the disconnecting mechanism (4) comprises a locking element (5), which is movably arranged, at least partially, relative to the first and to the second holding element (2, 3), and an arresting unit (6), wherein, in the connected state of the first and the second holding element (2, 3), the locking element (5) is held in an interlocked position by the arresting unit (6), in which the ejection force introduced is transmitted from the second holding element (3) to the first holding element (2) via the locking element (5), and, upon activation of the disconnecting mechanism (4), the arresting unit (6) moves the locking element (5) out of the interlocked position in such a way that the connection between the first and the second holding element (2, 3) is disconnected,
wherein the arresting unit (6) comprises a fixation element (10), which holds the locking element (5) in the interlocked position against a release force applied by a release element (11),
**characterized in that** the fixation element (10) has a wire and/or a strap, which, upon activation of the disconnecting mechanism (4), is at least partially destroyed due to a force applied by the disconnecting mechanism (4).

2. The connecting unit according to claim 1,
**characterized in that** the locking element (5) has a movably arranged molded body (7) with a snap-in structure (8) and at least one snap-in element (9), which can be at least partially accommodated within the snap-in structure (8).

3. The connecting unit according to claim 2,
**characterized in that**, in the connected state of the first and the second holding element (2, 3), a force is transmitted from the second holding element to the first holding element via the snap-in element (9).

4. The connecting unit according to claims 2 or 3,
**characterized in that**, after activation of the disconnecting mechanism (4), the snap-in element (9) moves at least partially into the snap-in structure (8) of the molded body (7).

5. The connecting unit according to claim 1,
**characterized in that** the fixation element (10) has a stop element, which, upon activation of the disconnecting mechanism (4), is moved electrically, electromechanically, pneumatically and/or hydraulically.

6. The connecting element according to any one of the preceding claims,
**characterized in that** at least one of the holding elements (2, 3) comprises a guide element (15) that is symmetrical in relation to a longitudinal axis, in the interior (16) of which at least part of the locking element (5) is movably mounted and/or along the outer surface (17) of which the respective other holding element (3, 2) is movably mounted.

7. The connecting unit according to any one of the preceding claims,
**characterized in that** an elastic ejection element (12) is provided and arranged such that, in the connected state of the first and the second holding element (2, 3), an ejection force applied by the elastic ejection element (12) is at least partially transmitted from the second holding element (3) to the first holding element (2) via the locking element (5).

8. Use of a connecting unit (1) according to any one of the preceding claims, in order to transfer a component from a first into a second operating state upon occurrence of an event.

9. Use of a connecting unit (1) according to any one of claims 1 to 7 for deploying a solar panel or other functional element of a device launched into space, for closing an emergency door or gate in the event of an emergency and/or for releasing a lifeboat or life raft of a ship or other rescue device in the event of an emergency.

10. A subject matter (18) with a first and a second component (19, 20), which are at least temporarily connected with one another with a connecting unit (1) according to at least one of claims 1 to 7, wherein the first and the second holding element (2, 3) are either respectively fastened to the first and the second component (19, 20) via suitable fastening elements or are respectively designed in one piece with the first and the second component (19, 20).

11. A method for releasing two holding elements (2, 3) connected with one another against an ejection force and/or components (19, 20) respectively fastened to the holding elements, wherein a disconnecting mechanism with a locking element (5), which is at least partially moved relative to the two holding elements (2, 3), and an arresting unit (6) are provided, wherein, in the connected state of the first and the second holding element (2, 3), the arresting unit (6) holds the locking element (5) in an interlocked position, in which the ejection force is transmitted from the second holding element (3) to the first holding element (2) via the locking element (5), and, upon activation of the disconnecting mechanism (4), the arresting unit (6) moves the locking element (5) out of the interlocked position in such a way that the connection between the first and the second holding element (2, 3) is disconnected,
wherein the arresting unit (6) comprises a fixation element (10), which holds the locking element (5) in the interlocked position against a release force applied by a release element (11), and wherein the fixation element (10) has a wire and/or a strap, which, upon activation of the disconnecting mechanism (4), is at least partially destroyed due to a force applied by the disconnecting mechanism (4).

12. The method according to claim 11,
**characterized in that** the locking element (5) has a molded body (7) with a snap-in structure (8) and at least one snap-in element (9), wherein, in the connected state of the first and the second holding element (2, 3), the snap-in element (9) is arranged such that a force is transmitted from the second holding element (3) to the first holding element (2) via the snap-in element (9) and, after activation of the disconnecting mechanism (4), the snap-in element (9) is moved relative to the molded body (7) and at least partially inserted into the snap-in structure (8) of the molded body (7) in such a way that no force is transmitted between the two holding elements (2, 3) via the snap-in element (9).

13. The method according to claims 11 or 12,
**characterized in that**, after activation of the disconnecting mechanism (4), at least part of the locking element (5) is moved in an interior (16) of a guide element (15) of one of the two holding elements (2, 3) and the respectively other holding element (3, 2) moves along an outer surface (17) of the guide element (15).

## Revendications

1. Unité de connexion (1) comprenant un premier et un second élément de maintien (2, 3), lesquels sont au moins temporairement reliés l'un à l'autre contre une force d'éjection introduite dans au moins l'un desdits éléments de maintien (2, 3) et sont respectivement configurés pour être reliés ou pouvoir être connectés à différents composants, dans laquelle un mécanisme de déconnexion (4) est prévu, sur activation duquel la connexion entre lesdits premier et second éléments de maintien (2, 3) est déconnectée,
dans laquelle ledit mécanisme de déconnexion (4) comprend un élément de verrouillage (5), qui est disposé de manière mobile, au moins partiellement, par rapport auxdits premier et second éléments de maintien (2, 3), et une unité d'arrêt (6), dans laquelle, à l'état connecté desdits premier et second éléments de maintien (2, 3), ledit élément de verrouillage (5) est maintenu dans une position verrouillée par ladite unité d'arrêt (6), dans laquelle la force d'éjection introduite est transmise dudit second élément de maintien (3) audit premier élément de maintien (2) par l'intermédiaire dudit élément de verrouillage (5), et, lors de l'activation dudit mécanisme de déconnexion (4), ladite unité d'arrêt (6) déplace ledit élément de verrouillage (5) hors de la position verrouillée de telle sorte que la connexion entre lesdits premier et second éléments de maintien (2, 3) est déconnectée, ladite unité d'arrêt (6) comprenant un élément de fixation (10) qui maintient ledit élément de verrouillage (5) dans la position verrouillée contre une force de relâchement appliquée par un élément de relâchement (11),
**caractérisée en ce que** ledit élément de fixation (10) comporte un fil et/ou une sangle qui, lors de l'activation dudit mécanisme de déconnexion (4), est au moins partiellement détruit/e par la force appliquée par ledit mécanisme de déconnexion (4).

2. L'unité de connexion selon la revendication 1,
**caractérisée en ce que** ledit élément de verrouillage (5) possède un corps moulé mobile (7) avec une structure d'encliquetage (8) et au moins un élément d'encliquetage (9) qui peut être logé au moins partiellement dans ladite structure d'encliquetage (8).

3. L'unité de connexion selon la revendication 2,
**caractérisée en ce que**, à l'état connecté desdits premier et second éléments de maintien (2, 3), une force est transmise du second élément de maintien au premier élément de maintien par l'intermédiaire dudit élément d'encliquetage (9).

4. L'unité de connexion selon l'une des revendications 2 ou 3,
**caractérisée en ce que**, après activation dudit mécanisme de déconnexion (4), ledit élément d'encliquetage (9) se déplace au moins partiellement dans ladite structure d'encliquetage (8) dudit corps moulé (7).

5. L'unité de connexion selon la revendication 1,
**caractérisée en ce que** ledit élément de fixation (10) comporte un élément d'arrêt qui, lors de l'activation dudit mécanisme de déconnexion (4), est déplacé électriquement, électro-mécaniquement, pneumatiquement et/ou hydrauliquement.

6. L'élément de connexion selon l'une des revendications précédentes,
**caractérisé en ce qu'**au moins un desdits éléments de maintien (2, 3) comprend un élément de guidage (15) symétrique par rapport à un axe longitudinal, à l'intérieur (16) duquel au moins une partie dudit élément de verrouillage (5) est montée de manière mobile et/ou le long de la surface extérieure (17) de laquelle l'autre élément de maintien respectif (3, 2) est monté de manière mobile.

7. L'unité de connexion selon l'une des revendications précédentes,
**caractérisée en ce qu'**un élément d'éjection élastique (12) est prévu et disposé de manière à ce que, à l'état de connexion desdits premier et second éléments de maintien (2, 3), une force d'éjection appliquée par ledit élément d'éjection élastique (12) soit au moins partiellement transmise dudit second élément de maintien (3) audit premier élément de maintien (2) par l'intermédiaire dudit élément de verrouillage (5).

8. Utilisation d'une unité de connexion (1) selon l'une des revendications précédentes, afin de faire passer un composant d'un premier à un second état de fonctionnement lors de la survenance d'un événement.

9. Utilisation d'une unité de connexion (1) selon l'une des revendications 1 à 7 pour déployer un panneau solaire ou un autre élément fonctionnel d'un dispositif lancé dans l'espace, pour fermer une porte ou un portail d'urgence en cas d'urgence et/ou pour libérer un canot de sauvetage ou un radeau de sauvetage d'un navire ou un autre dispositif de sauvetage en cas d'urgence.

10. Objet (18) avec un premier et un second composant (19, 20), qui sont au moins temporairement reliés l'un à l'autre par une unité de connexion (1) selon au moins l'une des revendications 1 à 7, dans lequel lesdits premier et second éléments de maintien (2, 3) sont soit respectivement fixés auxdits premier et second composants (19, 20) par des éléments de fixation appropriés, soit respectivement conçus d'une seule pièce avec lesdits premier et second composants (19, 20).

11. Procédé pour libérer deux éléments de maintien (2, 3) reliés l'un à l'autre contre une force d'éjection et/ou desdits composants (19, 20) respectivement fixés aux éléments de maintien, dans lequel un mécanisme de déconnexion avec un élément de verrouillage (5), qui est au moins partiellement déplacé par rapport aux deux éléments de maintien (2, 3), et une unité d'arrêt (6) sont fournis, dans lequel, à l'état connecté desdits premier et second éléments de maintien (2, 3), ladite unité d'arrêt (6) maintient l'élément de verrouillage (5) dans une position verrouillée, dans laquelle la force d'éjection est transmise dudit second élément de maintien (3) audit premier élément de maintien (2) par l'intermédiaire de l'élément de verrouillage (5), et, lors de l'activation du mécanisme de déconnexion (4), ladite unité d'arrêt (6) déplace ledit élément de verrouillage (5) hors de la position verrouillée de telle sorte que la connexion entre lesdits premier et second éléments de maintien (2, 3) est déconnectée,
dans lequel ladite unité d'arrêt (6) comprend un élément de fixation (10) qui maintient l'élément de verrouillage (5) dans la position verrouillée contre une force de libération appliquée par un élément de libération (11), et dans lequel ledit élément de fixation (10) comporte un fil et/ou une sangle qui, lors de l'activation du mécanisme de déconnexion (4), est au moins partiellement détruit/e par une force appliquée par ledit mécanisme de déconnexion (4).

12. Le procédé selon la revendication 11,
**caractérisé en ce que** ledit élément de verrouillage (5) a un corps moulé (7) avec une structure d'encliquetage (8) et au moins un élément d'encliquetage (9), dans lequel, à l'état connecté desdits premier et second éléments de maintien (2, 3), ledit élément d'encliquetage (9) est disposé de telle sorte qu'une force est transmise dudit second élément de maintien (3) audit premier élément de maintien (2) par l'intermédiaire dudit élément d'encliquetage (9) et, après l'activation du mécanisme de déconnexion (4), ledit élément d'encliquetage (9) est déplacé par rapport audit corps moulé (7) et au moins partiellement inséré dans ladite structure d'encliquetage (8) dudit corps moulé (7) de manière à ce qu'aucune force ne soit transmise entre les deux éléments de maintien (2, 3) par l'intermédiaire dudit élément d'encliquetage (9).

13. Le procédé selon l'une des revendications 11 ou 12,
**caractérisé en ce que**, après l'activation dudit mécanisme de déconnexion (4), au moins une partie dudit élément de verrouillage (5) est déplacée à l'intérieur (16) d'un élément de guidage (15) de l'un des deux éléments de maintien (2, 3) et que l'autre élément de maintien (3, 2) se déplace le long d'une surface extérieure (17) dudit élément de guidage (15).
